# EUROPÄISCHE PATENTSCHRIFT

(11) **EP 3 501 997 B1**
(45) Veröffentlichungstag und Bekanntmachung des Hinweises auf die Patenterteilung: **22.07.2020**
(21) Anmeldenummer: 17209311.4
(22) Anmeldetag: 21.12.2017
(51) Int. Cl.: B65B 57/00, B65B 59/04, B65B 65/00

(54) **AUFBEWAHRUNGSWAGEN FÜR SCHUTZABDECKUNGEN**
STORAGE CARRIAGE FOR SAFETY COVERS
CHARIOT DE STOCKAGE POUR COUVERCLES DE PROTECTION

(43) Veröffentlichungstag der Anmeldung: 26.06.2019
(73) Patentinhaber: MULTIVAC Sepp Haggenmüller SE & Co. KG, 87787 Wolfertschwenden (DE)
(72) Erfinder: LAU, Christian, 88178 Heimenkirch (DE); EHRMANN, Elmar, 87730 Bad Grönenbach (DE)
(74) Vertreter: Grünecker Patent- und Rechtsanwälte PartG mbB

(56) Entgegenhaltungen:
- EP-A1- 2 305 566
- EP-A1- 2 749 499
- DE-A1- 10 218 150
- DE-A1-102008 019 628

## Beschreibung

Die Erfindung bezieht sich auf einen Aufbewahrungswagen für Schutzabdeckungen einer Tiefziehverpackungsmaschine gemäß dem Anspruch 1.

Aus der DE 102008019628 A1 ist ein Werkzeugwechselwagen für eine Tiefziehverpackungsmaschine bekannt, um Formwerkzeuge zu wechseln. Dabei kann der Werkzeugwechselwagen in die Tiefziehverpackungsmaschine hinein gefahren werden, wobei eine Seitenverkleidung der Verpackungsmaschine hierzu entfernt werden muss und das Gestell in diesem Bereich ausgespart ist.

Es sind allseits Tiefziehverpackungsmaschinen bekannt, die Schutzabdeckungen vor und/oder nach Arbeitsstationen wie einer Form- oder einer Siegelstation aufweisen, um ein Hineingreifen eines Maschinenbedieners in die Arbeitsstation zu verhindern. Solche Tiefziehverpackungsmaschinen werden häufig in Lebensmittel verarbeitenden Betrieben eingesetzt und müssen regelmäßig gereinigt werden. Hierzu müssen die Schutzabdeckungen, die händisch auf der Oberseite der Tiefziehverpackungsmaschine aufgesetzt werden, von der Tiefziehverpackungsmaschine entfernt werden, um einen guten Zugang zu den darunter liegenden Bereichen zu bekommen. Die Schutzabdeckungen werden hierzu oftmals nur auf den Boden oder auf einen nächstgelegenen Ablagetisch gelegt bzw. gestapelt. Hierbei kann es zu Beschädigungen kommen, die den korrekten Einsatz auf der Tiefziehverpackungsmaschinen verhindern. Zudem ist das Verbringen der Schutzabdeckungen an von der Tiefziehverpackungsmaschine weit entfernte Ablagepositionen zeitaufwändig.

Aufgabe der Erfindung ist es, die Handhabung von Schutzabdeckungen an einer Tiefziehverpackungsmaschine beim Reinigungsvorgang zu verbessern.

Diese Aufgabe wird gelöst durch einen Aufbewahrungswagen für Schutzabdeckungen einer Tiefziehverpackungsmaschine mit den Merkmalen des Anspruchs 1. Vorteilhafte Weiterbildungen der Erfindung sind in den Unteransprüchen angegeben.

Erfindungsgemäß zeichnet sich der Aufbewahrungswagen zum Aufnehmen von wenigstens zwei Schutzabdeckungen einer Verpackungsmaschine, vorzugsweise einer Tiefziehverpackungsmaschine, dadurch aus, dass der Aufbewahrungswagen bewegbare Halter zur Aufnahme von Schutzabdeckungen der Verpackungsmaschine aufweist, wobei die Halter zwischen einer Parkstellung und einer Aufnahmestellung umstellbar sind, wobei der Aufbewahrungswagen unter ein Maschinengestell der Verpackungsmaschine positionierbar ist, wenn sich die Halter in der Parkstellung befinden. So kann der Aufbewahrungswagen direkt an bzw. unter der Verpackungsmaschine verstaut werden und es entfällt ein zeitaufwändiges Suchen nach dem passenden Aufbewahrungswagen und ein zusätzlicher Aufbewahrungsplatz für den Aufbewahrungswagen selbst. Die am Aufbewahrungswagen aufgenommenen Schutzabdeckungen können so sehr einfach gereinigt werden, wie auch die Bereiche an der Verpackungsmaschine, die durch die abgenommen Schutzabdeckungen gut zugänglich gemacht wurden.

Unter "Maschinengestell" sind im Rahmen der Erfindung nur horizontal ausgerichtete Teile des Maschinengestells zu verstehen, also z. B. keine Standfüße.

Vorzugsweise sind die Halter klappbar, um diese auf einfache Weise z. B. aus einer weitestgehend horizontalen Parkposition in eine vertikale Aufnahmestellung umzustellen.

Eine vorteilhafte Alternative sieht vor, dass die Halter umsteckbar sind, um diese auf einfache Weise z. B. aus einer weitestgehend horizontalen Parkposition in eine vertikale Aufnahmestellung umzustellen.

Bevorzugt stehen die Halter in der Parkstellung nicht über eine obere Störkontur des Aufbewahrungswagens über, um dem Aufbewahrungswagen eine möglichst große Bauhöhe zuzugestehen und trotzdem ein Positionieren unter das Maschinengestell zu ermöglichen. Die Störkontur ist über die Außenabmessungen des Aufbewahrungswagens definiert. Die obere Störkontur der Aufbewahrungswagens wird über das am weitesten nach oben ragenden Bauteils des Aufbewahrungswagens definiert.

In einer besonders vorteilhaften Ausgestaltung ist wenigstens ein Halter an einer Haltevorrichtung angeordnet und die Haltevorrichtung ist an einem Rahmen des Aufbewahrungswagens verschiebbar angebracht. Dies bringt den Vorteil einer höheren Flexibilität mit sich, um die Halter in ihrem Abstand zueinander verändern zu können, um unterschiedliche Breiten von Schutzabdeckungen, beispielsweise von unterschiedlichen Verpackungsmaschinen, aufnehmen zu können.

Bevorzugt sind die Halter in der Aufnahmestellung arretierbar, um schlüssellos in der Aufnahmestellung gesichert zu sein.

Vorzugsweise weist der Aufbewahrungswagen eine Gesamthöhe von weniger als 300 mm, vorzugsweise von weniger als 200 mm, auf, wenn sich die Halter in der Parkstellung befinden. So kann der Aufbewahrungswagen auch unter Gestelle von Verpackungsmaschinen positioniert werden, die aufgrund von Sicherheitsanforderungen lediglich solche Abstände von der Unterkante Maschinengestell zum Boden zulassen.

Vorzugsweise ragt der Aufbewahrungswagen nicht über die Seitenrahmen der Verpackungsmaschine hinaus, um einen Maschinenbediener nicht zu behindern bzw. ihn nicht zu gefährden.

Die Erfindung wird anhand eines Ausführungsbeispiels gemäß den folgenden Figuren näher erläutert. Im Einzelnen zeigen:
Fig. 1 eine Seitenansicht einer Tiefziehverpackungsmaschine,
Fig. 2 eine Darstellung des erfindungsgemäßen Aufbewahrungswagens mit Haltern in einer Parkposition und
Fig. 3 eine Darstellung des erfindungsgemäßen Aufbewahrungswagens mit Haltern in einer Aufnahmeposition mit Schutzabdeckungen.

Gleiche Komponenten sind in den Figuren durchgängig mit gleichen Bezugszeichen versehen.

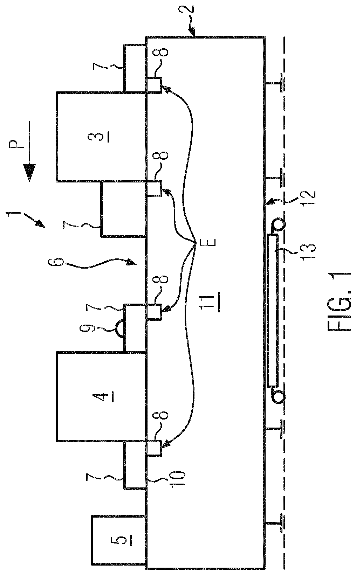

Fig. 1 zeigt schematisch eine Seitenansicht einer Bedienseite einer erfindungsgemäßen Verpackungsmaschine 1, die als Tiefziehverpackungsmaschine ausgebildet ist. Die Verpackungsmaschine 1 besitzt ein Maschinengestell 2, eine Formstation 3, eine Siegelstation 4 und eine Schneidstation 5. Die Formstation 3 formt Mulden in eine nicht näher dargestellte Unterfolie. Entlang einer Einlegestrecke 6 werden die Mulden der Unterfolie mit Produkten befüllt. An der Siegelstation 4 wird eine nicht näher dargestellte Deckelfolie auf die Unterfolie gesiegelt, nachdem das Muldeninnere evakuiert und/oder begast wurde, um die Haltbarkeit beispielsweise bei Lebensmitteln zu erhöhen. Die im Folienverbund der Unter- und Deckelfolie ausgebildeten Verpackungen werden an der Schneidstation 5 vereinzelt und aus der Verpackungsmaschine 1 maschinell heraustransportiert oder dieser manuell entnommen.

Gewisse Bereiche direkt vor oder nach der Formstation 3, der Siegelstation 4 und/oder der Schneidstation 5 müssen vor einem Eingriff von oben durch einen Bediener geschützt werden, um beispielsweise Verletzungen bei einem Eingriff in ein Hubwerk zu verhindern. Dafür sind gemäß Fig. 1 vor und nach der Formstation 3 sowie vor und nach der Siegelstation 4 Schutzabdeckungen 7 positioniert. Vorzugsweise werden die Schutzabdeckungen 7 anhand einer an der Verpackungsmaschine 1 ausgebildeten Erfassungseinheit E, insbesondere durch Sensoren 8, auf ihre Anwesenheit geprüft, so dass in Abwesenheit einer der Schutzabdeckungen 7, insbesondere auch dann, wenn diese nicht ordnungsgemäß, beispielsweise verkippt auf der Verpackungsmaschine 1 positioniert ist, kein Maschinenstart möglich ist.

Zu Wartungs-, Umbau- oder Reinigungszwecken können die lose auf dem Maschinengestell 2 aufgelegten Schutzabdeckungen 7 aus ihrer Position entfernt werden. Vornehmlich aus hygienischen Gründen ist es aber nicht gewünscht, dass die Schutzabdeckungen 7 auf den Boden neben die Verpackungsmaschine 1 gelegt werden. Vor allem bei einer wie üblich täglich durchgeführten Reinigung der Verpackungsmaschine 1 müssen die Schutzabdeckungen 7 von ihrer Position abgenommen werden, um den Bereich darunter für die Reinigung zugänglich zu machen. Dabei sollten auch die Schutzabdeckungen 7 selbst günstig für die Reinigung positioniert sein.

Die Schutzabdeckungen 7 gemäß Fig. 1 können je nach der zu schützenden Zone unterschiedlich groß ausgebildet sein. Dabei sind die jeweiligen Schutzabdeckungen 7 in Produktionsrichtung P betrachtet gleich breit ausgebildet. Fig. 1 deutet jedoch an, dass die jeweiligen Schutzabdeckungen 7 in Produktionsrichtung P betrachtet unterschiedlich tief und/oder hoch ausgebildet sein können. Auch gleich große Schutzabdeckungen 7 kämen in Betracht.

Die beispielhaft in Fig. 1 vor der Siegelstation 4 positionierte Schutzabdeckung 7 besitzt einen Griff 9, der einem Bediener das Anheben der Schutzabdeckung 7 erleichtert. Der Griff 9 kann auch an den anderen Schutzabdeckungen 7 der Fig. 1 vorgesehen sein.

Fig. 1 zeigt auch, dass die jeweiligen Schutzabdeckungen 7 auf einer Oberseite 10 eines Seitenrahmens 11 der Verpackungsmaschine 1 aufgesetzt sind. Der Seitenrahmen 11 bildet einen Teil des Maschinengestells 2 der Verpackungsmaschine 1 aus.

Unter einer Unterseite 12 des Maschinengestells 2 bzw. des Seitenrahmens 11 ist ein erfindungsgemäßer Aufbewahrungswagen 13 unter der Verpackungsmaschine 1 in seiner Parkposition dargestellt.

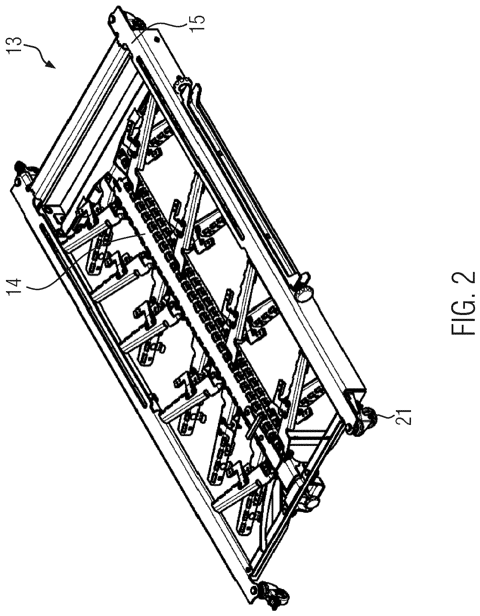

Fig. 2 zeigt den Aufbewahrungswagen 13 selbst in einer Darstellung mit Haltern 14 in einer Parkposition. Dabei stehen die Halter 14 nicht über den Aufbewahrungswagen 13 bzw. dessen Rahmen 15 über. An dem Rahmen 15 sind mehrere drehbar gelagerte und arretierbare Rollen 21 angeordnet, um den Aufbewahrungswagen 13 frei verschieben und auch beim Be- und Entladen von Schutzabdeckungen 7 ihn feststellen zu können.

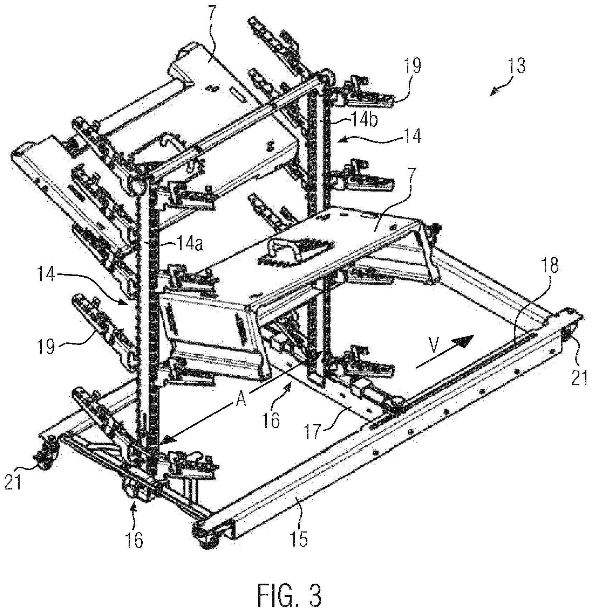

Fig. 3 zeigt den Aufbewahrungswagen 13 selbst in einer Darstellung mit Haltern 14 in einer Aufnahmeposition, bei der die Halter 14 aus einer horizontalen Lage in die vertikale Lage aufgerichtet wurden. Über ein Schwenklager 16 kann der Halter 14 um eine nicht näher dargestellte horizontale Achse geschwenkt werden.

Ein erster Halter 14a ist an der linken vorderen Seite angeordnet, während ein zweiter Halter 14b weiter rechts an einer Haltevorrichtung 17 angeordnet ist. Über die verschiebbare Haltevorrichtung 17, die entlang einer nicht näher dargestellten Führung in einer Verschieberichtung V bewegbar und in einer Kulissenvorrichtung 18 klemmbar ist, kann der Abstand A zwischen beiden Haltern 14a und 14b derart eingestellt werden, dass die Schutzabdeckungen 7 an Auflagen 19 der Halter 14a, 14b abgelegt werden können.

Der Rahmen 15 mit den Rollen 21 an allen vier Ecken bildet die Basis des Aufbewahrungswagens 13. Die Halter 14 sind über die Schwenklager 16 und/oder über die Haltevorrichtung 17 am Rahmen 15 angeordnet.

## Patentansprüche

1. Aufbewahrungswagen (13) zum Aufnehmen von wenigstens zwei Schutzabdeckungen (7) einer Verpackungsmaschine (1), vorzugsweise einer Tiefziehverpackungsmaschine, **dadurch gekennzeichnet, dass** der Aufbewahrungswagen (13) bewegbare Halter (14) zur Aufnahme von Schutzabdeckungen (7) der Verpackungsmaschine (1) aufweist, wobei die Halter (14) zwischen einer Parkstellung und einer Aufnahmestellung umstellbar sind, wobei der Aufbewahrungswagen (13) dazu konfiguriert ist, unter ein Maschinengestell (2) der Verpackungsmaschine (1) positionierbar zu sein, wenn sich die Halter (14) in der Parkstellung befinden.

2. Aufbewahrungswagen nach Anspruch 1, **dadurch gekennzeichnet, dass** die Halter (14) klappbar sind.

3. Aufbewahrungswagen nach Anspruch 1, **dadurch gekennzeichnet, dass** die Halter (14) umsteckbar sind.

4. Aufbewahrungswagen nach einem der vorigen Ansprüche, **dadurch gekennzeichnet, dass** die Halter (14) in der Parkstellung nicht über eine obere Störkontur des Aufbewahrungswagen (13) überstehen.

5. Aufbewahrungswagen nach einem der vorigen Ansprüche, **dadurch gekennzeichnet, dass** wenigstens ein Halter (14b) an einer Haltevorrichtung (17) angeordnet ist und die Haltevorrichtung (17) an einem Rahmen (15) des Aufbewahrungswagens (13) verschiebbar angebracht ist.

6. Aufbewahrungswagen nach einem der vorigen Ansprüche, **dadurch gekennzeichnet, dass** die Halter (14) in der Aufnahmestellung arretierbar sind.

7. Aufbewahrungswagen nach einem der vorigen Ansprüche, **dadurch gekennzeichnet, dass** der Aufbewahrungswagen (13) eine Gesamthöhe von weniger als 300 mm, vorzugsweise von weniger als 200 mm, aufweist, wenn sich die Halter (14) in der Parkstellung befinden.

8. Aufbewahrungswagen nach einem der vorigen Ansprüche, **dadurch gekennzeichnet, dass** der Aufbewahrungswagen (13) so unter dem Maschinengestell (2) der Verpackungsmaschine (1) positionierbar ist, dass er seitlich nicht über die Seitenrahmen (11) der Verpackungsmaschine (1) hinausragt.

## Claims

1. Storage trolley (13) for receiving at least two protective covers (7) of a packaging machine (1), preferably of a thermoforming packaging machine, **characterized in that** said storage trolley (13) has movable holders (14) for receiving protective covers (7) of said packaging machine (1), where said holders (14) is convertible between a parking position and a receiving position, where said storage trolley (13) is configured to be positionable below a machine frame (2) of said packaging machine (1) when said holders (14) are in the parking position.

2. Storage trolley according to claim 1, **characterized in that** said holders (14) are tiltable.

3. Storage trolley according to claim 1, **characterized in that** said holders (14) can be inserted and withdrawn.

4. Storage trolley according to one of the preceding claims, **characterized in that** said holders (14) in the parking position do not project beyond an upper interference contour of said storage trolley (13).

5. Storage trolley according to one of the preceding claims, **characterized in that** at least one holder (14b) is disposed on a holding device (17) and said holding device (17) is slidably mounted on a frame (15) of said storage trolley (13).

6. Storage trolley according to one of the preceding claims, **characterized in that** said holders (14) can be locked in the receiving position.

7. Storage trolley according to one of the preceding claims, **characterized in that** said storage trolley (13) has an overall height of less than 300 mm, preferably less than 200 mm, when said holders (14) are in the parking position.

8. Storage trolley according to one of the preceding claims, **characterized in that** said storage trolley (13) can be positioned below said machine frame (2) of said packaging machine (1) such that it does not project laterally beyond the side frame (11) of said packaging machine (1).

## Revendications

1. Chariot de stockage (13) destiné à recevoir au moins deux couvercles de protection (7) d'une machine d'emballage (1), de préférence une machine d'emballage par emboutissage profond, **caractérisé en ce que** le chariot de stockage (13) comporte des supports mobiles (14) destinés à recevoir les couvercles de protection (7) de la machine d'emballage (1), dans lequel les supports (14) peuvent être commutés entre une position de stationnement et une position de réception, le chariot de stockage (13) étant configuré pour pouvoir être positionné sous un châssis de machine (2) de la machine d'emballage (1) lorsque les supports (14) sont en position de stationnement.

2. Chariot de stockage selon la revendication 1, **caractérisé en ce que** les supports (14) sont pliables.

3. Chariot de stockage selon la revendication 1, **caractérisé en ce que** les supports (14) sont réversibles.

4. Chariot de stockage selon l'une des revendications précédentes, **caractérisé en ce que** les supports (14) ne dépassent pas d'un contour supérieur gênant du chariot de stockage (13) en position de stationnement.

5. Chariot de stockage selon l'une des revendications précédentes, **caractérisé en ce qu'**au moins un support (14b) est disposé sur un dispositif de maintien (17) et le dispositif de maintien (17) est monté de manière déplaçable sur un châssis (15) du chariot de stockage (13).

6. Chariot de stockage selon l'une des revendications précédentes, **caractérisé en ce que** les supports (14) peuvent être verrouillés dans la position de réception.

7. Chariot de stockage selon l'une des revendications précédentes, **caractérisé en ce que** le chariot de stockage (13) a une hauteur totale inférieure à 300 mm, de préférence inférieure à 200 mm, lorsque les supports (14) sont en position de stationnement.

8. Chariot de stockage selon l'une des revendications précédentes, **caractérisé en ce que** le chariot de stockage (13) peut être positionné sous le châssis (2) de la machine d'emballage (1) de telle sorte qu'il ne dépasse pas latéralement des châssis latéraux (11) de la machine d'emballage (1).
